# EUROPEAN PATENT APPLICATION

(11) **EP 1 607 893 A1**
(43) Date of publication of application: **21.12.2005**
(21) Application number: 04257099.4
(22) Date of filing: 16.11.2004
(51) Int. Cl.: G06F 17/60

(54) **Vehicle services manager**

(30) Priority: 16.06.2004 US 869341
(71) Applicant: Yazaki North America, Inc., Canton, Michigan 48187 (US)
(72) Inventor: Grenier, Alain H., Ann Arbor, Michigan 48103 (US); Dow, Christopher L., Clawson, Michigan 48017 (US); Schmitt, Kenneth A., Pinckney, Michigan 48169 (US)
(74) Representative: Cheyne, John Robert Alexander M.

(57) **Abstract**

Services for a vehicle or fleet of vehicles can be ordered, renewed, modified, managed, configured, and/or cancelled through a common interface. Services may be managed remotely from outside the vehicle as well as from within the vehicle. For example, the driver of a vehicle could access a secure web site from their home computer to subscribe for satellite radio services, cancel a subscription for global positioning information, renew a contract for broadband Internet access in the vehicle, and modify a relationship for remote vehicle security services. Each service that is registered with the system can possess a different status. Such functionality allows devices necessary for various services to be pre-installed in the vehicle. The service management system can also store user profiles that reflect user preferences and patterns of behavior with respect to how the services are performed and configured.

## Description

### BACKGROUND OF THE INVENTION

The invention is a system and method for managing vehicle services (collectively a "device management system" or simply the "system").

Drivers and occupants of vehicles (collectively "occupants") benefit from an increasing number and variety of services that are accessed from their vehicles. Navigation applications, cell phones, high-speed Internet access, satellite radio, remote vehicle access services, vehicle tracking services, security services, and other types of services (collectively "vehicle services" or simply "services") are accessed by many different devices in a wide variety of different vehicles and contexts. A single vehicle may provide occupants with multiple vehicle services that are accessed through different devices that are manufactured and sold by different businesses.

The rapid growth in the number and types of services accessible from vehicles raises certain challenges that have not been answered by the existing art. For example, potential synergies between various vehicle services for a particular vehicle often go unrealized because the various services and service providers are not aware of each other. Furthermore, the management of various vehicle services for even a single vehicle can be administratively burdensome. Those burdens grow exponentially with the management of vehicle services in the context of multiple family vehicles or a fleet of corporate vehicles.

Providers of vehicle services compete with each other, often across a wide range of services. There is no incentive for those service providers to make it easier for occupants to access competing services from competing providers. Thus, the existing art does not appear to teach or even suggest techniques for enhancing the convenience and benefits of users for managing vehicle services.

### SUMMARY OF THE INVENTION

The invention is a system and method for managing vehicle services (collectively "service management system" or simply the "system").

The system can manage the registration, activation, configuration, implementation, and modification of one or more services for one or more vehicles. Users can potentially access the system through a variety of interfaces, including interfaces within the vehicle as well as remote interfaces, such as a web site accessed from a home computer.

The system can use a detection subsystem for detecting devices and potential services, a registration subsystem for registering various devices and potential services with the system, and an activation subsystem for activating the services made accessible by the various devices in the vehicle.

The system can use one or more management components for exchanging information across various communication ports to the various devices in the vehicle. The contents of a particular message can activate a service, deactivate a service, register a device, deregister a device, and/or configure one or more services or devices.

The system allows users to access services within a vehicle by providing users with a user interface capable of receiving different service determinations. Those service determinations can be stored in a memory component located in the vehicle. Services can be automatically invoked by the memory component using the stored service determinations.

The system can be more fully understood upon reading the following detailed description in conjunction with the accompanying drawings.

### BRIEF DESCRIPTION OF THE DRAWINGS

Figure 1 is a process flow diagram illustrating an example of a management component managing multiple services accessible from various devices in a vehicle.

Figure 2 is block diagram illustrating an example of how a management component takes into consideration device, framework, and service information in managing vehicle service.

Figure 3 is a use case diagram illustrating an example of a system that performs functionality at the device, framework, and service level.

Figure 4 is a block diagram illustrating an example of a subsystem-level view of the system that includes a detection subsystem, a registration subsystem, and an activation subsystem.

Figure 5 is a block diagram illustrating an example of a subsystem-level view of the system that includes a configuration subsystem.

Figure 6 is a process flow diagram illustrating an example of the system using user interactions with a user interface to automatically activate device-based services.

Figure 7 is a flow chart diagram illustrating an example of a service registration process.

Figure 8 is a flow chart diagram illustrating an example of a service request process.

Figure 9 is a flow chart diagram illustrating an example of a service release process.

### DETAILED DESCRIPTION

The invention is a system and method for managing vehicle services (collectively "service management system" or simply the "system"). The service management system provides vehicle users (including owners, drivers, occupants, and managers) with the ability to fully manage the services made accessible to and in the vehicle. The system provides users with the ability to detect potential service-providing devices, activate/subscribe to particular services, configure particular services, and enable different services to share information with each other.

Services for a vehicle or fleet of vehicles can be ordered, renewed, modified, managed, configured, and/or cancelled through a common interface. Services may be managed remotely from outside the vehicle as well as from within the vehicle. For example, the driver of a vehicle could access a secure web site from their home computer to subscribe for satellite radio services, cancel a subscription for global positioning information, renew a contract for broadband Internet access in the vehicle, and modify a relationship for remote vehicle security services. Each service that is registered with the system can possess a different status. Such functionality allows devices necessary for various services to be pre-installed in the vehicle. The service management system can also store user profiles that reflect user preferences and patterns of behavior with respect to how the services are performed and configured.

### I. INTRODUCTION OF ELEMENTS

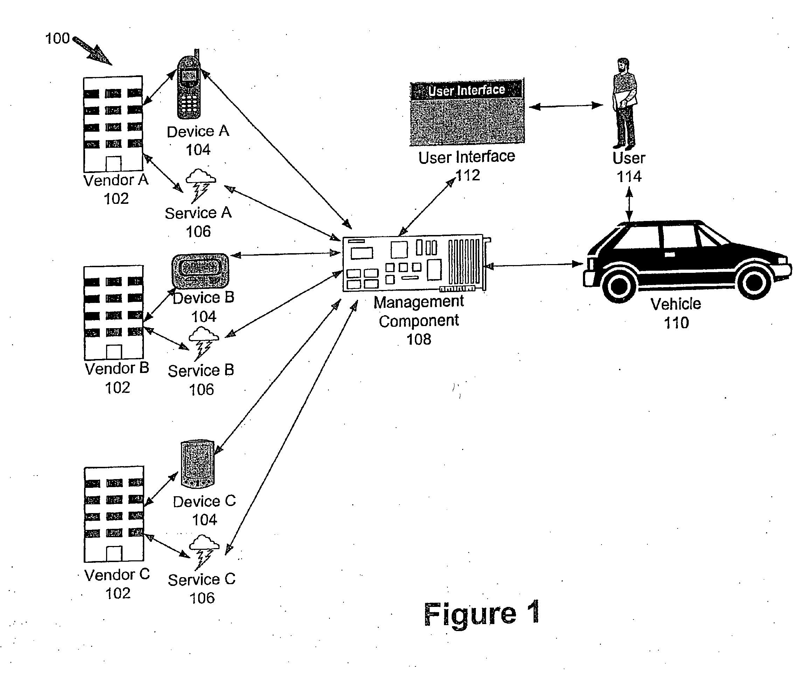

Figure 1 is a process flow diagram illustrating an example of a service management system 100 using a management component 108 to manage multiple services 106 accessible from various devices 104 in a vehicle 110.

### A. Vendors/Providers

Services 106 can be provided from a number of different vendors 102. Vendors 102 can also be referred to as providers. In some instances, vendors 102 may be vehicle manufacturers. However, in many instances, services are provided by vendors 102 who are not manufacturers. In some embodiments, vendors 102 of vehicle services for a particular vehicle 110 and the manufacturer of the particular vehicle 110 may have no contractual relationship or even cognizance of each other. The system 100 can support services from a potentially wide range of vendors 102. In the example of Figure 1, there are three different vendors 102.

Vendor A (102) provides service A (106) through device A (104), vendor B (102) provides service B (106) through device B (104), and vendor C (102) provides service C (106) through device C (104). Vendor A (102) provides mobile or cell phone services 106. Vendor B (102) provides satellite radio services 106. Vendor C (102) provides navigation services 106

### B. Devices

A device 104 is any physical means or component by which one or more services 106 are delivered to vehicles 110. In some embodiments, a single device 104 may be used to provide many different types of services 106. For example, an onboard computer could be used to play music from a satellite radio, connect to the Internet using a broad band wireless connection, and access navigation information.

In the example of Figure 1, each device 104 provides only one service 106. Device A (104) provides service A (106), device B (104) provides service B (106), and device C (104) provides service C (106). Device A (104) is a cell phone. Device B (104) is control consol for a satellite radio receiver. Device C (104) is a screen for viewing navigation information.

Each device 104 can communicate with a management component 108 using some type of wired and/or wireless connection. Devices 104 can both transmit and receive information with the management component 108.

Some devices 104 require the ability to exchange information with sources outside the vehicle 110 to properly function. For example, a satellite radio device 104 requires that a satellite exist to transmit the signal and a broad band network device 104 requires that the network be up and running. In contrast, many devices do not require access to outside communication sources. For example, a DVD player can function properly without any signal from the outside world.

Devices 104 can be registered, unregistered, active and/or inactive. A registered device 104 is a device 104 that is known by the system 100 and the management component 108 to be usable to potentially perform one or more services 106. An unregistered device 104 is a device 104 that the management component 108 is not cognizant of. An active device 104 is a device 104 through which the vendor 102 allows users to currently access services 106. For example, a satellite radio receiver 104 with a current satellite radio subscription is an active device 104. When the subscription expires, the device 104 will be rendered inactive. An active device 104 can be either registered or unregistered. An inactive device 104 can be either a registered device 104 or an unregistered device 104. A registered device 104 can be either an active device 104 or an inactive device 104. An unregistered device 104 can be either an active device 104 or an inactive device 104. At the time of registration, a device 104 can declare itself to be shared or unshared.

### C. Services

A service 106 is any function which can be delivered to the vehicle 110 through the use of one or more devices 104 located on the vehicle 110. Potential services 106 include but are not limited to: navigation applications, cell phones, high-speed Internet access, satellite radio, remote vehicle access services, vehicle tracking services, security services, and other types of services (collectively "vehicle services" or simply "services").

In the example of Figure 1, service A (106) is cell phone communication, service B (106) is satellite radio access, and service C (106) is a visual navigation application. In some embodiments, services 106 can share information with each other. For example, a navigation or global positioning service can provide information to a security application to aid in the recover of a stolen vehicle 110. A navigation application could utilize a broad band Internet connection to determine whether road construction or traffic merits choosing an alternative route, etc.

Services 106 can be registered, unregistered, active and/or inactive. A registered service 106 is a service 106 that is known by the system 100 and the management component 108 to be usable to potentially perform one or more services 106. An unregistered service 106 is a service 106 that the management component 108 is not cognizant of. An active service 106 is a service 106 through which the vendor 102 allows users to currently access services 106. For example, a satellite radio receiver 104 with a current satellite radio subscription is an active service 106. When the subscription expires, the service 106 will be rendered inactive. An active service 106 can be either registered or unregistered. An inactive service 106 can be either a registered service 106 or an unregistered service 106. A registered service 106 can be either an active service 106 or an inactive service 106. An unregistered service 106 can be either an active service 106 or an inactive service 106. At the time of registration, a service 106 can declare itself to be shared or unshared.

One potentially important example of a service is a location service 106. One or more devices 104 in the vehicle 110 may benefit from accessing location information. An onboard global positioning system can export location information to the management component 108, or directly to other devices 104 in accordance with the configuration information provided by the management component 108. On the basis of the location information, the behavior of the management component 108 can be altered with respect to which services 106 are invoked, and how those services 106 are invoked.

### D. Management component

A management component 108 is one or more computer devices within the vehicle 110 that are used to manage vehicle services 106 and the devices 104 used to provide those services 106. In many embodiments, the management component is connected to the various devices 104 of the system 100 through one or more communication networks. The management component 108 is often an embedded computer with many different communication ports for communicating with the various devices 104 responsible for providing the services 106. The management component 108 can potentially be used to communicate with vendors 102 as well as with the devices 104 in the vehicle 110.

The management component 108 can include: a detection application for detecting devices 104 and/or services 106; a registration application for registering devices 104 and/or services 106; a deregistration application (which can also be referred to as a remove registration application) for deregistering devices 104 and/or services 106; an activation application for activating devices 104 and/or services 106; a deactivation application for deactivating devices 104 and/or services; an information sharing application for conveying information from one device 104 and/or service 106 to another device 104 and/or service 106; a user profile that includes user selection and historical behavior information; conflict resolution data; and various configuration applications for configuring the devices 104 and/or services 106 incorporated into the system 100. The applications used by the management component 108 can also be referred to as heuristics. In some embodiments, the programming logic used to perform the various heuristics may not exist as distinct software applications.

Heuristics/applications can potentially be invoked by both vendors 102 and users 114, depending on the circumstance. The initial configuration of the management component 108 can be performed by users 114, vendors 102, third-party service providers, or vehicle manufacturers.

The management component 108 can manage all registered services 106 and devices 104. The management component 108 can automatically track the runtime status of the registered devices 104 and services 106, and update the lists of active and registered devices 104 and services 106. Devices 104 that need to utilize a service 106 provided by another device 104 can request an instance of the service 106 from the management component 108 using preconfigured user data.

### 1. Detection heuristic/application

A detection heuristic/application can be used by the management component 108 to identify the availability of a device 104 to the system 100. As devices 104 are added to the vehicle 110, the detection heuristic/application can provide for identifying the device 104 and one or more of the services 106 that can potentially be provided by the device 104. The detection heuristic/application can also determine whether or not a particular device 104 has been removed from the vehicle 110, or is otherwise not available to the system 100.

### 2. Registration heuristic/application

A registration heuristic/application can be used by the management component 108 for registering devices 104 and/or services 106. In a preferred embodiment, registration can automatically follow detection, regardless of whether a subscription exists for the particular device 104 or service 106. Thus, inactive devices 104 and services 106 can be registered. In alternative embodiments, it may be desirable to limit registration to devices 104 and services 106 that are active.

### 3. Deregistration heuristic/application

A deregistration heuristic/application (which can also be referred to as a remove registration heuristic/application) allows the system 100 to undo or reverse the impact of the registration heuristic/application.

### 4. Activation heuristic/application

An activation heuristic/application allows the system 100 to activate a particular device 104 or service 106. Some embodiments of devices 104 and services 106 may require activity outside the vehicle 110 in order to achieve activation. For example, it may be necessary to transmit a payment to a vendor 102, sign and mail a contract, etc. in order to activate a device 104 or service 106. However, even in those embodiments, the management component 108 can include the technological capability of activating a device 104 or service 106 once the business requirements have been satisfied.

### 5. Deactivation heuristic/application

A deactivation heuristic/application (which can also be referred to as a cancel activation heuristic/application) allows the system 100 to undo or reverse the impact of the activation heuristic/application.

### 6. Information sharing heuristics/applications

Each device 104 and service 106 can incorporate various inputs and generate various outputs. In some instances, relevant output may be limited to a status of the device 104 or service 106. For example, in the case of a satellite radio service, it may be relevant to other services that the service 106 merely exists, while in the case of a global positioning service 106, the location of the vehicle 110 may be useful to many different services 106. To some extent, the ability of the system 100 to share information between different services 106 and different devices 104 will depend on the design of the different services 106 and devices 104.

### 7. Profiles

In order to better achieve the goals and desires of particular users, the system 100 can support the creation, modification, and automatic enforcement of individual user profiles as well as overall vehicle profiles. Profiles can be influenced both explicitly by affirmative selections made by users, as well as implicitly, by the history of activity for a particular user or vehicle. The use of profiles can be particularly desirable in the context of information sharing heuristics/applications. The system 100 can be configured so that profiles automatically influence the performance of one or more services 106.

### 8. Conflict resolution data

Conflict resolution data can be created, updated, and stored by the system 100 using the management component 108. Conflict resolution data assists the system 100 manage technological as well as operational conflicts between different services 106 and devices 104.

### 9. Configuration heuristic/application

In some embodiments of the system 100, it may be desirable to provide users with the ability to configure devices 104 and services 106 through the management component 108 of the system 100. Centralized management of the devices 104 and services 106 of the system 100 can assist the system 100 in various management objectives.

### E. User Interface

A user interface 112 is the means by which a user 114 (not the vendor 112) interacts with the management component 108 described above. Different embodiments of the system 100 can provide for different user interfaces 112, some being more limiting than others. Some embodiments of the system 100 can include user interfaces that provide for more than one way to achieve a particular outcome. For example, a user request to the system 100 could come in the form of a telephone call, an e-mail, an instant message, a web site interaction, or the physical manipulation of a control knob within the vehicle 110. In some embodiments, a single user interface 112 will be used to manage all of the devices 104 and services 106 managed by the system 100. In alternative embodiments, there may be a series of different user interfaces 112.

The user interface 112 does not need to know the details of how a particular device 104 or service 106 is implemented. The specific implementation of a service 106 can be reconfigured by the user 114 without impacting the user interface 112.

### F. User

A user 114 is typically a human being utilizing the benefits of the system 100. Drivers, vehicle occupants, passengers, and managers of vehicle fleets are all examples of potential users 114 of the system 100. Users 114 can also include various forms of intelligence technologies, such as expert systems, artificial intelligence components, robots, etc.

### G. Vehicle

A vehicle 110 is typically an automobile, such as a car or SUV. However, any transportation mechanism can be potentially supported by the processing of the system 100. Bicycles, skate boards, motorcycles, airplanes, boats, submarines, and space craft can potentially benefit from the processing performed by the system 100.

### II. INCLUSION OF FRAMEWORK, DEVICE, AND SERVICE CONSIDERATIONS

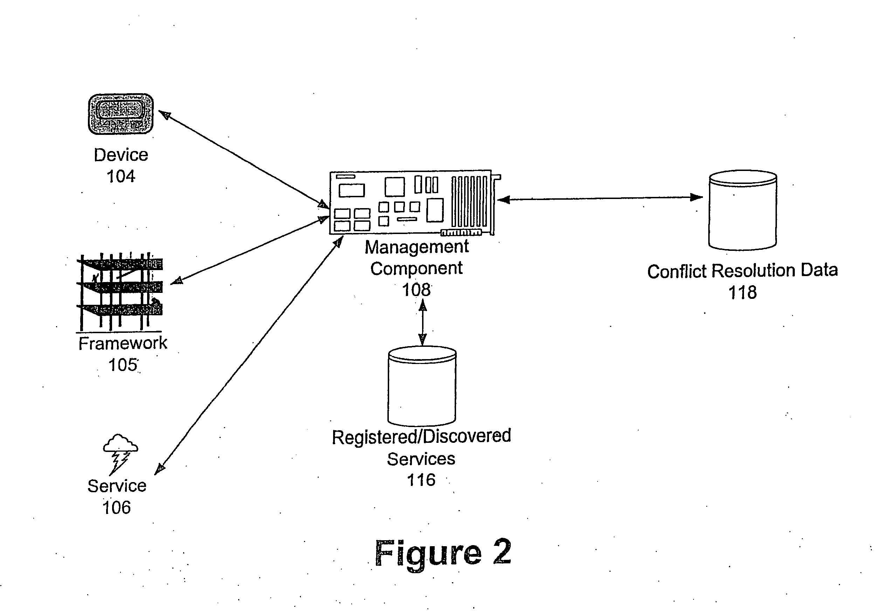

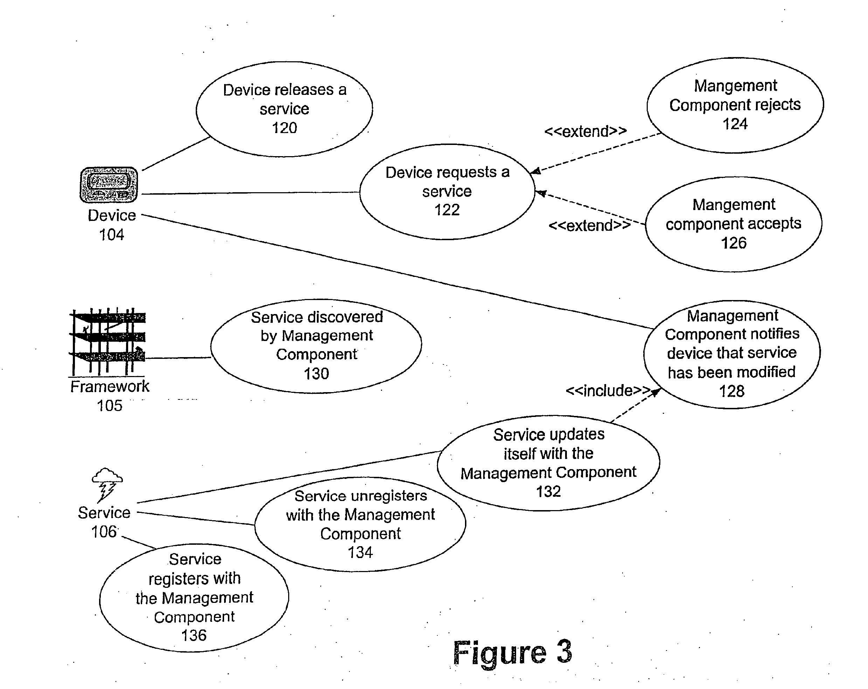

Figure 2 is block diagram illustrating an example of how a management component takes into consideration device, framework, and service information in managing vehicle service. The system 100 integrates considerations relating the individual devices 104 and services 106, as well as an overall framework 105 or network of connected components, into the functionality of the system 100. Figure 3 is in many respects, a different view of Figure 2. Figure 3 is a use case diagram illustrating an example of a system that performs functionality at the device, framework, and service level.

### A. Devices

As discussed above, the various devices 104 responsible for providing the services 106 to the vehicle 110 can interact with the management component 108 and exchange information with the management component 108. As illustrated in Figure 2, devices 104 can engage in two-way communication with the management component 108. Examples of communication functions that can be initiated by devices 104 and sent to the management component 108 include UpdateConflictResolution(); ReleaseService(); and RequestService(). Communication functions initiated by the management component 108 can include RequestDenied(); RequestSuccess(); and Notification().

As illustrated in Figure 3, devices 104 can invoke a ReleaseService() 120 function and a RequestService() 122 function. In turn, the management component 108 can respond with a rejection 124 or an acceptance 126. The management component can also provide a notification 128 to the device 104 that a service 106 relating to the device 104 has been modified.

### B. Framework

Returning to Figure 2, a framework 105 is the totality of the devices 104 and services 106 available to the system 100, including the one or more communication networks that allows the various devices 104 and services 106 to potentially communicate with each other, as well as with the management component 108. Examples of framework communications and functions include DiscoverServices() and ServicesFound().

As illustrated in Figure 3, the framework is responsible for a discovery of new devices 130, for example in a similar way that a conventional desktop operating system is responsible for identifying the addition of new hardware.

### C. Services

As discussed above, the ultimate purpose of the system 100 is to manage the delivery of services 106 to the vehicle 110. Examples of services functions include Update() (132), Unregister() (134), and Register() (136).

### D. Registered/Discovered Services Memory Component

Returning to Figure 2, the status of various services 106 and/or devices 104 can be stored on some type of memory component that is accessible by the management component 108. An example of such a memory component is a registered/discovered services repository or database 116.

### E. Conflict Resolution Data

The management component 108 of the system 100 can use some type of memory component to store conflict resolution data. An example of such a memory component is a conflict resolution database 118. The conflict resolution repository or database 118 can store information relating to overlapping services 106. For example, there may be more than one cell phone service available to the vehicle 110, and depending on the location and time of day, one service 106 may be preferable to another service 106. In some instances, conflict resolution is inherently exclusive. Two services 106 may require the use of the same device 104, and the device 104 may only be able to support one service 106 at a time. One example of a conflict resolution function is UpdateConflictResolution(). Another example could be that two or more devices 104 provide a similar service 106. Depending on the time of day, location, or cost of using the device 104, one device may be preferable to another device.

### III. SUBSYSTEM-LEVEL VIEWS

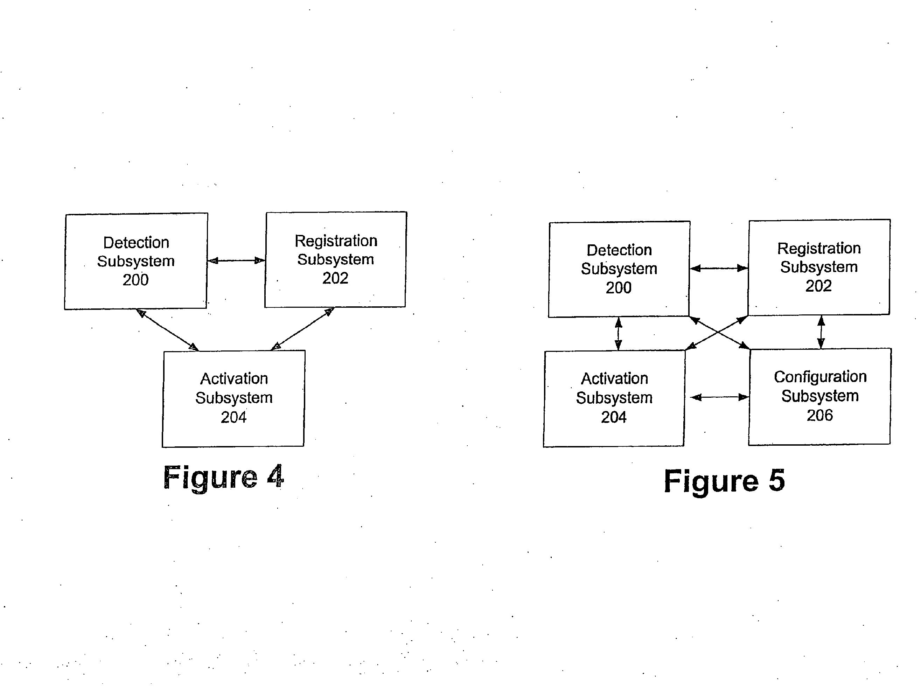

Figure 4 is a block diagram illustrating an example of a subsystem-level view of the system 100 that includes a detection subsystem 200, a registration subsystem 202, and an activation subsystem 204. Figure 5 is a block diagram illustrating an example of a subsystem-level view of the system 100 that also includes a configuration subsystem 206.

### A. Detection Subsystem

A detection subsystem 200 is used to detect and identify devices 104 that are: (1) connected to one or more networks in the vehicle 110 such that the management component 108 has the possibility of communicating with the device 104; and (2) capable of providing services 106 to the vehicle 110. In a typical embodiment, the detection subsystem 200 is not influenced or modified by interactions with the user 114. Instead, the detection subsystem 200 often works in an automated manner without human or user 114 intervention.

### B. Registration Subsystem

A registration subsystem 202 provides for registering devices 104 and/or services 106. Registration information can be stored on a registered/discovered services database 116. Various registration functions are described in greater detail below.

### C. Activation Subsystem

An activation subsystem 204 can allow users 114, vendors 102, vehicle manufacturers, and/or various third-party service providers to activate services 106 and/or devices 104 within the system 100. User interactions with the activation subsystem 204 can involve the sending of user requests through the user interface 112. User requests can take the form of a telephone call, an e-mail, an instant message, a web site interaction, or potentially any other type of communication. Instructions by users 112 can include decisions to subscribe to a particular service 106, a decision to renew a particular subscription, defining the status of a service 106 or device as shared or unshared, etc.

### D. Configuration Subsystem

Some embodiments of the system 100 include a configuration subsystem 206 for configuring the services 106 provided through use of the system 100. Any instructions by a user 114, vendor 102, vehicle manufacturer, or third-party service provider can potentially configure vehicle services 106 through the use of the configuration subsystem 206.

### IV. PROCESS-FLOW VIEWS

### A. Activating Services

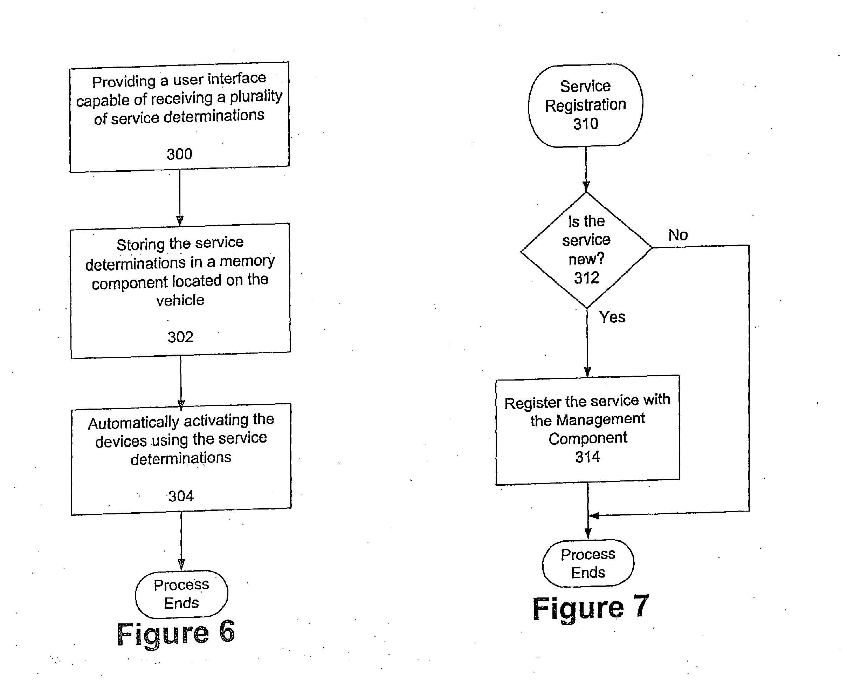

Figure 6 is a process flow diagram illustrating an example of the system 100 using user interactions with a user interface 112 to automatically activate device-based services 106.

At 300, a user 112 is provided access to a user interface 112 so that the system 100 can receive one or more service determinations in the form of user interactions.

At 302, one or more service determinations made by the user 114 are stored in a memory component that is accessible to the management component 108.

At 304, one or more services 106 are automatically invoked using the stored service determinations. The process at 304 can take into consideration a user profile and/or a vehicle profile in the automatic invocation of services 106. As discussed above, activating a service 106 can be accomplished in a wide variety of different ways. In some embodiments of the system 100, the user interface 112 used by users 114 is a web site that is accessed from outside the vehicle 110.

### B. Service Registration

Figure 7 is a flow chart diagram illustrating an example of a service registration process 310. At 312, the system 100 determines whether or not a particular service 106 or device 104 is new. If the device 104 or service 106 is not new, the process ends. If the device 104 or service 106 is new, the service 106 or device 104 can be registered with the management component 108 at 314.

### C. Service Request

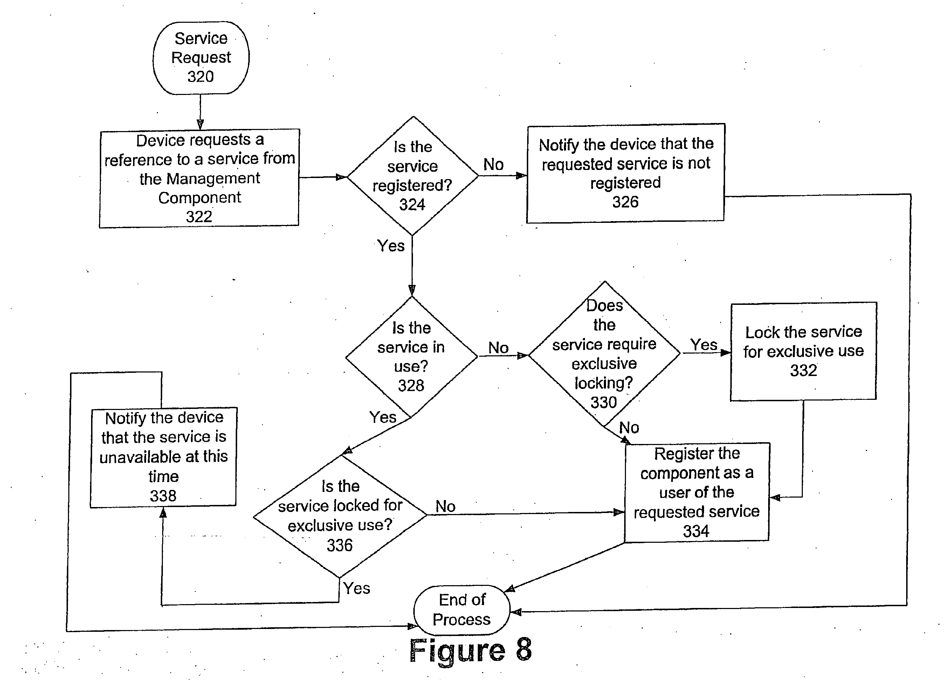

Figure 8 is a flow chart diagram illustrating an example of a service request process 320.

At 322, a device 104 can request a reference to a service 106 from the management component 108.

At 324, the system 100 determines whether or not the requested service 106 has been registered. If the requested service 106 has not been registered, the system 100 at 326 notifies the device 104 that the requested service 106 is not currently registered, and the process ends. In some embodiments, the system 100 may automatically prompt the user 114 to see if a registration process should be invoked.

If the requested service has been registered, the system 100 determines at 328 whether or not the requested service 106 is currently in use. If the service 106 is in use, the system 100 then determines at 336 whether the use is exclusive, e.g. whether the service is locked with respect to the instant request. If the prior use is exclusive, a notification is sent at 338. In some embodiments, the system 100 can automatically notify the user 114 when the exclusive lock expires.

If at 336 the service 106 is not locked for exclusive use, the service 106 can be registered at 334.

If at 328 the service 106 is not in use, the system 100 determines at 330 whether or not the requested service requires exclusive locking. If exclusive locking is required, it is performed at 332 before the service is registered at 334. If exclusive locking is not required, the process proceeds directly to the registering of the service at 334 before the process ends.

### D. Service Release Process

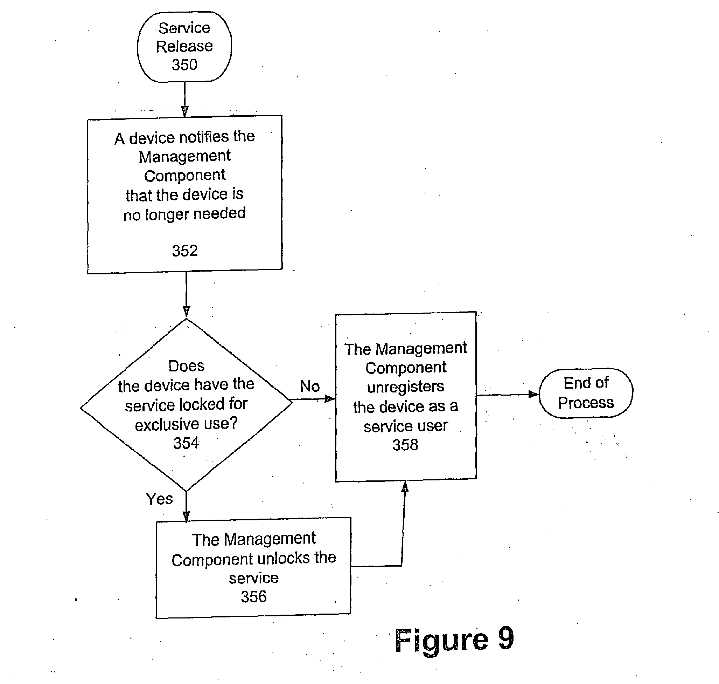

Figure 9 is a flow chart diagram illustrating an example of a service release process 350.

At 352, a device 104 notifies the management component 108 that the device 104 is no longer needed.

At 354, the system 100 determines whether or not the device 104 has the service 106 locked for exclusive use. If the service 106 is not locked for exclusive use, the management component 108 deregisters the device 104 at 358 and the process can end. If the service 106 is exclusively locked, the management component 108 at 356 must also unlock the service 106 in conjunction with the deregistration service at 358

### V. ALTERNATIVE EMBODIMENTS

The above description is intended to be illustrative and not restrictive. Many embodiments and applications other than the examples provided would be apparent to those of skill in the art upon reading the above description. The scope of the invention should be determined, not with reference to the above description, but should instead be determined with reference to the appended claims, along with the full scope of equivalents to which such claims are entitled. It is anticipated and intended that future developments will occur in image alignment systems and methods, and that the invention will be incorporated into such future embodiments.

## Claims

1. A service management system for a vehicle, comprising:
a plurality of services capable of being delivered to the vehicle;
a plurality of devices located within the vehicle, wherein each said service is capable of being delivered through at least one said device;
a registration application; and
a management component, wherein at least one said service is registered with said management component by said registration application.

2. The system of claim 1, wherein said management component is not one of said devices.

3. The system of claim 1, wherein said plurality of services includes at least two of: (a) a cell phone service; (b) a navigation tool; (c) an Internet access service; (d) a satellite radio service; (e) a remote vehicle access service; (f) a vehicle tracking service; and (g) a vehicle security services.

4. The system of claim 1, further comprising a registration heuristic and a remove registration heuristic, wherein said registration application includes said registration heuristic and said remove registration heuristic.

5. The system of claim 1, said plurality of services including an active service and an inactive service.

6. The system of claim 5, wherein said inactive service is registered with said management component by said registration application.

7. The system of claim 1, wherein at least two of said plurality of services are registered with said management component by said registration application.

8. The system of claim 1, said plurality of services further including a registered service and an unregistered service, wherein said registration application changes said unregistered service into said registered service.

9. The system of claim 1, further comprising an activation application, said plurality of services further including an active service and an inactive service, wherein said activation application changes said inactive service into said active service.

10. The system of claim 1, further comprising a user interface, wherein said user interface is accessible from outside the vehicle.

11. The system of claim 1, further comprising a detection application and an unregistered service, wherein said detection application is configured to automatically identify the existence of said unregistered service.

12. The system of claim 1, further comprising a network, wherein said devices are connected to said network.

13. The system of claim 1, further comprising a vendor communication and a service registration, wherein said system transmits said communication in response to said service registration.

14. The system of claim 1, further comprising a vendor communication and a service activation, wherein said system transmits said communication in response to said service activation.

15. The system of claim 1, further comprising a user interface, wherein said user interface provides for invoking an activation application, a deactivation application, a registration application, and a deregistration application.

16. The system of claim 1, wherein said user interface is a web site.

17. An embedded computer, comprising:
a plurality of communication ports, wherein said plurality of communication ports provide for communicating with a plurality of devices that provide for the performance of a plurality of services, wherein said plurality of communication ports are configured to transmit a plurality of messages;
a management component, wherein said management component is configured to receive and generate said messages, wherein said management component is located within a vehicle, said management component providing for:
activating at least one said service;
deactivating at least one said service;
registering at least one said service; and
deregistering at least one said service.

18. The embedded computer of claim 17, wherein at least one of said plurality of messages is generated in response to a user action.

19. The embedded computer of claim 17, wherein at least one of said plurality of messages is generated in response to a vendor action.

20. The embedded computer of claim 17, further comprising a first device and a second device, wherein said management component obtains a vehicle attribute from said first device and transmits said vehicle attribute to said second device.

21. The embedded computer of claim 20, wherein said vehicle attribute is a vehicle location.

22. The embedded computer of claim 17, wherein said embedded computer does not perform any of said services.

23. The embedded computer of claim 17, said management component further including a user profile, wherein said at least one said service is influenced by said user profile.

24. A system of managing the delivery of services in a vehicle, comprising:
a detection subsystem, said detection subsystem providing for detecting a device connected to a network in the vehicle, wherein said device is configured to provide a service;
a registration subsystem, said registration subsystem providing for registering said service and said device configured to provide said service;
an activation subsystem, said activation subsystem providing the activation of said service.

25. The system of claim 24, wherein the activation of said service occurs through a user request.

26. The system of claim 25, wherein said user request includes at least one of: (a) a telephone call; (b) an e-mail; (c) an instant message; and (d) a web site interaction.

27. The system of claim 25, wherein said activation subsystem further provides for a renewal of said service.

28. The system of claim 25, further comprising a user interface for submitting said user request, wherein said user interface provides for submitting a plurality of user requests relating to a plurality of devices and a plurality of services.

29. The system of claim 24, further comprising a shared/unshared status, wherein said activation subsystem can set said share/unshared status for said service.

30. A method for making services available in a vehicle, comprising:
providing an user interface capable of receiving a plurality of service determinations;
storing said plurality of service determinations in a memory component located on the vehicle; and
automatically activating a plurality of services using said service determinations.

31. The method of claim 30, further comprising creating a user profile within said memory component, wherein user profile influences the performance of at least one of said plurality of services.

32. The method of claim 30, wherein activating a service includes transmitting a subscription request to a service provider.

33. The method of claim 30, wherein said user interface is located outside the vehicle.
